# EUROPÄISCHE PATENTSCHRIFT

(11) **EP 0 987 145 B1**
(45) Veröffentlichungstag und Bekanntmachung des Hinweises auf die Patenterteilung: **15.11.2006**
(21) Anmeldenummer: 99116817.0
(22) Anmeldetag: 01.09.1999
(51) Int. Cl.: B60R 16/02, H02J 7/14

(54) **Zwei-Batteriensystem**
Twin battery system
Système à deux batteries

(30) Priorität: 17.09.1998 DE 19842656
(43) Veröffentlichungstag der Anmeldung: 22.03.2000
(73) Patentinhaber: Volkswagen Aktiengesellschaft, 38436 Wolfsburg (DE)
(72) Erfinder: Dierker, Uwe, Dipl.-Ing., 38550 Isenbüttel (DE)
(74) Vertreter: Effert, Bressel und Kollegen

(56) Entgegenhaltungen:
- EP-A- 0 397 102
- DE-A1- 4 028 242
- US-A- 3 743 849

## Beschreibung

Die Erfindung betrifft ein Zwei-Batteriensystem und ein Verfahren zur Ansteuerung eines Zwei-Batteriensystems.

Ein derartiges Zwei-Batteriensystem mit einer Bordnetzbatterie und einer Starterbatterie ist aus der DE 38 41 769 bekannt, die bei laufendem Generator miteinander verbunden sind.
Dies hat bei geringer Generatorstromzufuhr den Nachteil, daß die Bordnetzbatterie durch Ladungsausgleich auf Kosten der Starterbatterie geladen wird, wenn der Ladezustand der Bordnetzbatterie schlechter als der der Starterbatterie ist. Beim bekannten Bordnetz ist auch zwischen der Bordnetzbatterie mit den Bordnetzverbrauchem und dem übrigen Teil des Bordnetzes ein Schalter angebracht, der bei Generatorstillstand geöffnet wird, sobald die Starterbatteriespannung unter einen zulässigen Grenzwert sinkt. Diese Maßnahme schützt die Starterbatterie nur bei Generatorstillstand vor einer vollständigen Entladung und läßt zudem eine Teilentladung der Starterbatterie zu. Durch diese schlechte Ausgangsbedingung wird beim Fahrtbeginn die Belastung der Starterbatterie verstärkt, wenn ein Ladungsausgleich der beiden Batterien zu Ungunsten der Starterbatterie stattfindet. Dies kann im Extremfall zur vollständigen Entladung oder Zerstörung der Starterbatterie führen.

Aus der gattungsbildenden DE 40 28 242 ist ein Zwei-Batteriensystem bekannt, bei dem die Verbindung zwischen Starterbatterie und Bordnetzbatterie unabhängig vom Fahrzustand auftrennbar ist, wenn anderenfalls die Borddnetzbatterie aus der Starterbatterie aufgeladen werden würde. Die beiden Batterien sind miteinander verbunden, wenn die Bordnetzbatteriespannung größer ist als die Starterbatteriespannung. Ist die Spannung der Bordnetzbatterie kleiner als die der Starterbatterie, werden die beiden Batterien voneinander getrennt. Die Trennung kann unterschiedlich, beispielsweise durch Abschalten der Starterbatterie vom übrigen Bordnetz vorgenommen werden. Auf diese Weise wird die Starterbatterie nicht durch eine entladene Bordnetzbatterie belastet, der Generator kann im Arbeitsmodus die wichtigsten Verbraucher versorgen und gleichzeitig die Bordnetzbatterie aufladen. Die beiden Batterien können auch durch ein Abschalten der Bordnetzbatterie vom übrigen Bordnetz getrennt werden. Bei einer gegebenenfalls dann bestehenden Verbindung zwischen Generator und Starterbatterie kann die Starterbatterie aufgeladen werden.

Nachteilig an den bekannten Zwei-Batteriesystemen ist, daß die Ansteuerung des Starterbatterieschalters durch das Steuergerät sehr aufwendig ist. So müssen beispielsweise die Ladezustände der Bordnetzbatterie und der Starterbatterie erfaßt werden, um die Steuerinformation zu ermitteln.

Der Erfindung liegt daher das technische Problem zugrunde, ein Zwei-Batteriensystem zu schaffen, daß einfach und zuverlässig die Entladung der Starterbatterie verhindert.

Die Lösung des technischen Problems ergibt sich durch die Merkmale der Patentansprüche 1 und 6. Weitere vorteilhafte Ausgestaltungen der Erfindung ergeben sich aus den Unteransprüchen. Durch die Ausbildung des Starterbatterieschalters als POWER-MOSFET kann das Steuergerät wesentlich einfacher aufgebaut werden. Im Prinzip ist der MOSFET stets gesperrt. Wird nun der Starter bestätigt, kommt es zu einer Spannungsänderung am MOSFET, die über den Drainstrom vom Steuergerät erfaßbar ist. Alternativ kann der Starter auch mit dem Steuergerät verbunden sein, so daß die Einleitung des Startervorganges direkt erfaßt wird. Das Steuergerät schaltet dann über eine vorzeichengerechte Gatespannung den MOSFET durch, so daß von der Starterbatterie über den MOSFET der Starterstrom zum Starter fließen kann. Beginnt der Startermotor zu drehen, so kommt es zu Stromschwankungen, die am Drainstrom des MOSFET durch das Steuergerät erfaßt werden, so daß dieses durch Abschalten der Gatespannung den MOSFET wieder sperren kann. Dadurch wird die Starterbatterie nur im eigentlichen Startervorgang belastet. Ein weiterer Vorteil des MOSFET ist, daß dieser eine technologisch bedingte parasitäre Diode realisiert, deren Kathode über den Drainanschluß mit der Starterbatterie verbunden ist. Bei gesperrten MOSFET und entladener Bordnetzbatterie ist die Diode in Sperrichtung gepolt und es fließt bei Vernachlässigung des Sperrstroms kein Strom durch den MOSFET. Ist hingegen die Spannungsdifferenz von Bordnetzbatterie und Starterbatterie größer als ca. 0,7 V, so ist die Diode in Flußrichtung gepolt und vom Bordnetz kann über die Diode ein Ladestrom zur Starterbatterie fließen. Somit ist für den Ladevorgang der Starterbatterie das Steuergerät überflüssig.

In einer bevorzugten Ausführungsform ist der MOSFET mit einer integrierten Strommessung ausgebildet, so daß das Abgreifen des Drainstroms durch das Steuergerät vereinfacht wird. Vorzugsweise ist der MOSFET darüber hinaus mit einem internen Überstromschutz ausgebildet, so daß sich dieser bei Kurzschluß selbst abschaltet. Ein solcher MOSFET ist beispielsweise unter der Bezeichnung PROFET von der Firma Siemens bekannt.

Weiter kann dem Steuergerät ein Precrash- und/oder ein Crashsensor zugeordnet sein, so daß bei Erfassen einer Kollision der MOSFET gesperrt wird. Dazu kann auch der Bordnetzbatterie ein MOSFET zugeordnet sein, der im Normalbetrieb stets durchgeschaltet und nur im Kollisionsfall gesperrt ist.

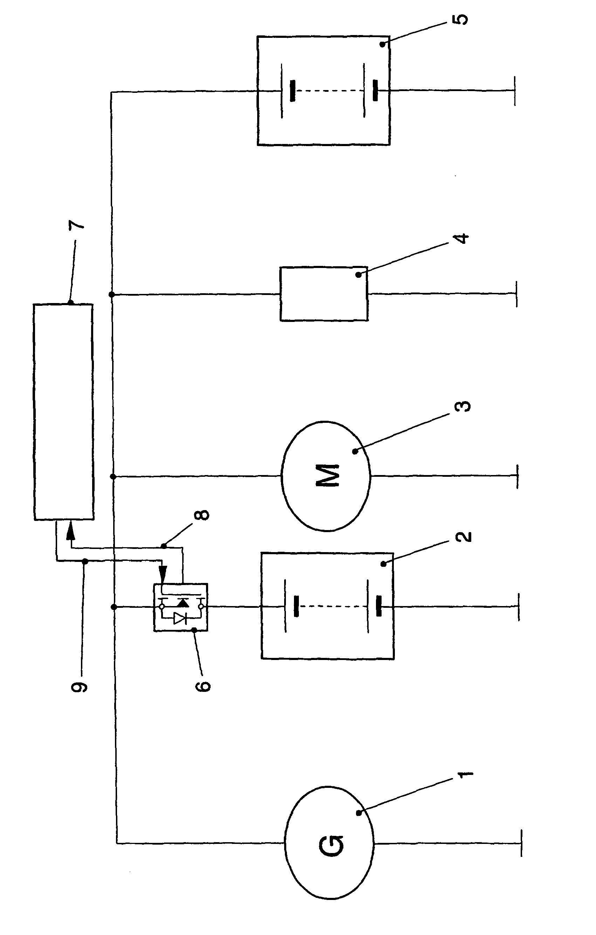

Die Erfindung wird nachfolgend anhand eines bevorzugten Ausführungsbeispieles näher erläutert. die einzige Figur zeigt eine schematische Schaltungsanordnung eines Zwei-Batteriensystems.

Das Zwei-Batteriesystem umfaßt einen Generator 1, eine Starterbatterie 2, einen Starter 3, einen Primärverbraucher 4, eine Bordnetzbatterie 5, einen Power-MOSFET 6 und ein Steuergerät 7. Der Generator 1, der Starter 3, die Primärverbraucher 4 und die Bordnetzbatterie 5 sind alle parallel zur Reihenschaltung von Starterbatterie 2 und MOSFET 6 geschaltet. Der MOSFET 6 ist mit einer internen Strommessung ausgebildet, deren Ergebnisse an einem von außen zugänglichen Pin abgreifbar sind und über eine Meßleitung 8 dem Steuergerät 7 zugeführt wird. Über eine Steuerleitung 9 ist das Steuergerät 7 darüber hinaus mit dem Gate des MOSFET 6 verbunden. Aufgrund der Schichtenfolge bei der Herstellung des MOSFET 6 bildet sich parallel zum eigentlichen MOSFET 6 eine parasitäre Diode, deren Kathode am Drainanschluß liegt.

Beim Stillstand des Kraftfahrzeuges und bei normaler Fahrt wird der MOSFET 6 über die Steuerleitung 9 vom Steuergerät 7 gesperrt, so daß die Starterbatterie 3 nicht belastet wird. Die gesamte Energie zur Betreibung des Bordnetzes wird nur von der Bordnetzbatterie 5 oder von dem Generator 1 und der Bordnetzbatterie 5 geliefert. Bei einem Startvorgang des Kraftfahrzeuges wird der Starter 3 betätigt, wozu beispielsweise ein Schalter im Zündanlaßschloß geschlossen wird. Diese Spannungsänderung im Starterzweig führt auch zu einer Spannungsänderung am MOSFET 6, die auch eine Änderung des Drainstromes zur Folge hat. Die Änderung des Drainstromes ist zwar minimal, da der MOSFET 6 weiterhin gesperrt ist, jedoch ausreichend um vom Steuergerät 7 die Einleitung des Startvorgangs zu erfassen. Das Steuergerät 7 erzeugt dann eine Gatespannung, um den MOSFET 6 aufzusteuern. Über den nun niederohmigen MOSFET 6 kann dann ein Starterstrom von der Starterbatterie 2 zum Starter 3 fließen, wodurch ein Startermotor zu drehen beginnt und den Verbrennungsmotor 1 anzuwerfen versucht. Bei einem erfolgreichen Startvorgang kommt es zu einem charakteristischen Stromverlauf am Startermotor und somit des Drainstroms am MOSFET 6. Durch Auswertung des Drainstroms kann das Steuergerät 7 den erfolgten Start erfassen und den MOSFET 6 wieder sperren, so daß die Starterbatterie 2 nur durch den eigentlichen Startvorgang belastet wird.

Die parasitäre Diode bildet eine integrierte Ladestrecke. Ist nämlich die Spannung der Starterbatterie 2 größer als die der Bordnetzbatterie 5, so kann keine Entladung der Starterbatterie 2 erfolgen, da sowohl der MOSFET 6 als auch die Diode gesperrt sind. Ist hingegen die Spannung der Bordnetzbatterie 5 um ca. 0,7 V größer als die der Starterbatterie 2, so ist die Diode in Flußrichtung gepolt und ein Ladestrom von der Bordnetzbatterie 5 zur Starterbatterie 2 kann fließen. Diese integrierte Ladestrecke arbeitet vollkommen unabhängig vom Steuergerät 7, so daß das Steuergerät 7 nur noch die Einleitung und Beendigung eines Startvorganges erfassen muß.

Des weiteren ist der MOSFET 6 mit einem internen Überstromschutz ausgebildet, d.h. ein Kurzschluß führt zu einem Selbstsperren des MOSFET 6. Zur Vermeidung von Fahrzeugbränden bei einem Unfall kann dem Steuergerät 7 ein Precrash- und/oder Crashsensor zugeordnet sein, so daß bei einem Unfall das Steuergerät 7 die Starterbatterie 2 und die Bordnetzbatterie 5 abschalten kann. Dazu wird der Bordnetzbatterie 5 ebenfalls ein MOSFET 6 zugeordnet, der im Normalbetrieb stets durchgeschaltet ist und nur bei einem Unfall gesperrt wird.

### BEZUGSZEICHENLISTE

- 1.: Generator
- 2.: Starterbatterie
- 3.: Starter
- 4.: Primärverbraucher
- 5.: Bordnetzbatterie
- 6.: Power-MOSFET
- 7.: Steuergerät
- 8.: Meßleitung
- 9.: Steuerleitung

## Patentansprüche

1. Zwei-Batteriensystem, umfassend einen Generator, einen Starter, eine Starterbatterie, einen Starterbatterieschalter, eine Bordnetzbatterie und ein Steuergerät, bei dem die Starterbatterie mit dem in Reihe geschalteten Starterbatterieschalter parallel zum Generator, Starter und Bordnetzbatterie geschaltet ist und der Starterbatterieschalter von dem Steuergerät ansteuerbar ist, **dadurch gekennzeichnet, dass** der Starterbatterieschalter als Power-MOS-FET (6) ausgebildet ist, dessen Gate mit dem Steuergerät (7) verbunden ist, wobei die Einleitung eines Startvorgangs (entweder) durch eine Spannungsänderung am Power-MOS-FET , die über den Drainstrom vom Steuergerät erfassbar ist, (6) oder direkt durch eine Verbindung des Starters zum Steuergerät (7) erfasst wird, das das Steuergerät (7) durch eine Gatespannung den Power-MOS-FET (6) durchschaltet, wobei das Steuergerät (7) den Drainstrom des Power-MOS-FET (6) kontinuierlich überwacht und die Gatespannung abschaltet, wenn der Drainstromverlauf auf eine Beendigung des Startvorganges schließen lässt.

2. Zwei-Batteriensystem nach Anspruch 1, **dadurch gekennzeichnet, dass** der Power-MOS-FET (6) mit einer internen Strommessung ausgebildet ist, die mit dem Steuergerät (7) verbunden ist.

3. Zwei-Batteriensystem nach Anspruch 1 oder 2, **dadurch gekennzeichnet, dass** der MOS-FET (6) über einen internen Überstromschutz verfügt.

4. Zwei-Batteriensystem nach einem der Ansprüche 1 bis 3, **dadurch gekennzeichnet, dass** dem Steuergerät (7) ein Precrash- und/oder Crashsensor zugeordnet ist.

5. Zwei-Batteriensystem nach einem der vorangegangenen Ansprüche, **dadurch gekennzeichnet, dass** in Reihe zur Bordnetzbatterie (5) ein weiterer MOS-FET (6) angeordnet ist.

6. Verfahren zum Ansteuern eines Zwei-Batteriensystems nach einem der vorangegangenen Ansprüche, umfassend folgende Verfahrensschritte:
a) Erfassen des Einleitens eines Startvorganges bei Betätigung des Starters (3) durch das Steuergerät (7),
b) Durchschalten des MOS-FET (6) durch Erzeugung einer Gatespannung durch das Steuergerät (7),
c) kontinuierliches Erfassen des Drainstroms des MOS-FET's (6) durch das Steuergerät (7) und
d) abschalten der Gatespannung durch das Steuergerät (7), falls der Drainstromverlauf auf eine Beendigung des Startvorganges schließen lässt.

7. Verfahren zum Ansteuern eines Zwei-Batteriensystems nach Anspruch 6, **dadurch gekennzeichnet, dass** bei Erfassen einer Kollision durch den Precrash- und/oder Crashsensor das Steuergerät (7) die MOS-FET's (6) sperrt.

## Claims

1. Two-battery system, comprising a generator, a starter, a starter battery, a starter battery switch, a vehicle power supply system battery and a controller, in which the starter battery together with the series-connected starter battery switch is connected in parallel with the generator, the starter and the vehicle power supply system battery, and the starter battery switch can be controlled by the controller, **characterized in that** the starter battery switch is in the form of a power MOSFET (6) whose gate is connected to the controller (7) with a starting process being initiated either by a voltage change across the power MOSFET (6), which can be detected via the drain current by the controller, or directly by a connection from the starter to the controller (7), with the controller (7) using a gate voltage to switch on the power MOSFET (6), with the controller (7) continuously monitoring the drain current of the power MOSFET (6) and switching off the gate voltage when the drain current profile makes it possible to deduce that the starting process has ended.

2. Two-battery system according to Claim 1, **characterized in that** the power MOSFET (6) is formed with internal current measurement, which is connected to the controller (7).

3. Two-battery system according to Claim 1 or 2, **characterized in that** the MOSFET (6) has internal overcurrent protection.

4. Two-battery system according to one of Claims 1 to 3, **characterized in that** the controller (7) has an associated precrash and/or crash sensor.

5. Two-battery system according to one of the preceding claims, **characterized in that** a further MOSFET (6) is arranged in series with the vehicle power supply system battery (5).

6. Method for controlling a two-battery system according to one of the preceding claims, comprising the following method steps:
a) detection of the initiation of a starting process on operation of the starter (3) by the controller (7);
b) switching on the MOSFET (6) by production of a gate voltage by the controller (7),
c) continuous detection of the drain current of the MOSFET (6) by the controller (7), and
d) switching off the gate voltage by the controller (7) when the drain current profile makes it possible to deduce that the starting process has ended.

7. Method for controlling a two-battery system according to Claim 6, **characterized in that** the controller (7) switches off the MOSFETs (6) when the precrash and/or crash sensor detect/detects a collision.

## Revendications

1. Système à deux batteries, comprenant un alternateur, un démarreur, une batterie de démarrage, un commutateur de batterie de démarreur, une batterie de réseau de bord et une commande, avec lequel la batterie de démarreur, en série avec le commutateur de batterie de démarreur, est branchée en parallèle avec l'alternateur, le démarreur et la batterie de réseau de bord et le commutateur de batterie de démarreur peut être commandé par la commande, **caractérisé en ce que** le commutateur de batterie de démarreur est réalisé sous la forme d'un MOSFET de puissance (6) dont la gâchette est reliée avec la commande (7), l'initiation d'une opération de démarrage étant détectée soit par une variation de la tension au niveau du MOSFET de puissance (6), laquelle peut être détectée par la commande (7) par le biais du courant de drain, soit directement par une liaison du démarreur avec la commande (7), laquelle rend le MOSFET de puissance (6) passant par une tension de gâchette, la commande (7) surveillant continuellement le courant de drain du MOSFET de puissance (6) et coupant la tension de gâchette lorsque la courbe du courant de drain permet de conclure à une fin de l'opération de démarrage.

2. Système à deux batteries selon la revendication 1, **caractérisé en ce que** le MOSFET de puissance (6) est réalisé avec un dispositif de mesure interne du courant qui est relié avec la commande (7).

3. Système à deux batteries selon la revendication 1 ou 2, **caractérisé en ce que** le MOSFET (6) dispose d'une protection interne contre les surintensités.

4. Système à deux batteries selon l'une des revendications 1 à 3, **caractérisé en ce qu'**un capteur de pré-collision et/ou de collision est associé à la commande (7).

5. Système à deux batteries selon l'une des revendications précédentes, **caractérisé en ce qu'**un MOSFET supplémentaire (6) est branché en série avec la batterie de réseau de bord (5).

6. Procédé de commande d'un système à deux batteries selon l'une des revendications précédentes, comprenant les étapes suivantes:
a) détection de l'initiation d'une opération de démarrage lors de l'actionnement du démarreur (3) par la commande (7),
b) mise en l'état passant du MOSFET (6) en générant une tension de gâchette avec la commande (7),
c) détection continue du courant de drain du MOSFET (6) par la commande (7) et
d) coupure de la tension de gâchette par la commande (7) lorsque la courbe du courant de drain permet de conclure à une fin de l'opération de démarrage.

7. Procédé de commande d'un système à deux batteries selon la revendication 6, **caractérisé en ce que** lors de la détection d'une collision par le capteur de pré-collision et/ou de collision, la commande (7) bloque les MOSFET (6).
